# FASCICULE DE BREVET EUROPEEN

(11) **EP 3 862 222 B1**
(45) Date de publication et mention de la délivrance du brevet: **16.08.2023**
(21) Numéro de dépôt: 21154769.0
(22) Date de dépôt: 02.02.2021
(51) Int. Cl.: B60N 2/68, B60N 2/70, B60N 2/72

(54) **PROCÉDÉ DE FIXATION D'UN COUSSIN DE SIÈGE**
VERFAHREN ZUR BEFESTIGUNG EINES SITZKISSENS
METHOD FOR ATTACHING A SEAT CUSHION

(30) Priorité: 04.02.2020 FR 2001085
(43) Date de publication de la demande: 11.08.2021
(73) Titulaire: Renault s.a.s, 92100 Boulogne Billancourt (FR)
(72) Inventeur: Brunel, Bernard, 92400 COURBEVOIE (FR); Grenier, Laurent, 77270 VILLEPARISIS (FR)
(74) Mandataire: Renault Group

(56) Documents cités:
- WO-A1-2011/112462
- DE-A1-102015 206 180
- FR-A1- 3 011 207
- US-A1- 2020 031 260

## Description

La présente invention concerne un procédé de fixation d'un coussin de siège.

Habituellement, le montage d'un coussin dans un siège de véhicule, comprenant une mousse avec un fil de rigidification et une coiffe, est difficile à effectuer car il nécessite des opérations de clipsages ou vissages réalisées avec des pièces de liaison rapportées, telles que par exemple des clips ou des vis. En effet, plusieurs opérations sont nécessaires pour le montage d'un seul coussin ou banquette ou dossier, et cet ensemble d'opérations est répété plusieurs fois le long d'une chaine d'assemblage, en fonction du nombre de coussins, de banquettes ou de dossiers à installer. De plus, dans la vie du véhicule des incidents liés à la casse d'un ou plusieurs clips, peuvent générer des coûts supplémentaires de maintenance des véhicules, ainsi que des désagréments pour les clients. WO2011/112462 divulgue un exemple d'un tel siège. US 2020/031260 A1 montre un procédé de fixation d'un coussin dans une armature d'assise d'un siège, ledit coussin comprenant un fil de rigidification, une mousse et une coiffe, ledit fil étant noyé dans ladite mousse qui est elle-même délimitée par ladite coiffe.

Un procédé de fixation d'un coussin de siège selon l'invention s'affranchit des inconvénients relevés dans l'état de la technique.

Afin de bien comprendre le positionnement des différentes pièces impliquées dans un siège selon l'invention, la description est réalisée en supposant que le siège est placé dans un véhicule et en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un procédé de fixation d'un coussin dans une armature d'assise d'un siège, ledit coussin comprenant un fil de rigidification, une mousse et une coiffe, ledit fil étant noyé dans ladite mousse qui est elle-même délimitée par ladite coiffe.

Selon l'invention, le procédé comprend les étapes suivantes :
- une étape de solidarisation d'au moins une bride de fixation à l'armature d'assise,
- une étape de mise en butée du coussin contre l'armature d'assise,
- une étape de déplacement du coussin autour de la butée,
- une étape de compression manuelle dudit coussin pour permettre à au moins une boucle d'extrémité du fil de rigidification de s'insérer dans la bride,
- une étape de relâchement du coussin pour permettre à ladite boucle d'extrémité de glisser à l'intérieur de la bride.

Le principe d'un tel procédé est de pouvoir monter un coussin sur une armature d'assise d'un siège de véhicule en s'affranchissant au moins partiellement d'outils. En effet, il suffit d'abord de mettre en butée le coussin contre l'armature d'assise, puis de le faire pivoter en exerçant sur celui-ci une pression manuelle afin de légèrement raccourcir sa longueur, dans le but de pouvoir faire rentrer la boucle d'extrémité du fil de rigidification dans la bride de fixation. En relâchant la pression, le coussin retrouve sa longueur initiale en entrainant l'insertion de la boucle d'extrémité dans la bride de fixation. Deux configurations peuvent se produire :
- Soit le coussin est monté dans l'armature d'assise exclusivement par le biais de boucles d'extrémité insérées dans des brides de fixation et dans ce cas aucun outil n'est nécessaire,
- Soit il est monté par le biais de boucles d'extrémité insérées dans des brides de fixation et par le biais de vis ou de clips de fixation, et dans ce cas l'utilisation d'un outil est certes nécessaire mais est fortement réduite par rapport au cas où il n'y aurait que des vis de fixation.

Chaque bride est profilée de sorte qu'une fois solidarisée à l'armature d'assise elle ménage avec ladite armature un espace dans lequel vient s'insérer la boucle d'extrémité. A titre d'exemple, une boucle d'extrémité peut être constituée par deux segment parallèles et par un segment incurvé reliant lesdits deux segments parallèles. Il existe autant de boucles d'extrémité qu'il n'existe de brides de fixation. Autrement dit, chaque bride de fixation est destinée à recevoir une boucle d'extrémité.

Selon une caractéristique possible de l'invention, l'armature d'assise comprend deux flasques latéraux et parallèles, ladite au moins une bride de fixation étant solidarisée à l'un desdits flasques. Avantageusement, chaque flasque est matérialisé par une paroi s'étendant dans un plan vertical et longitudinal XZ du véhicule,

Selon une caractéristique possible de l'invention, une bride de fixation est solidarisée à une zone avant de l'un des deux flasques, une autre bride de fixation étant solidarisée à une zone avant de l'autre flasque. De cette manière, une zone arrière du coussin est d'abord calée contre l'armature d'assise, puis ledit coussin bascule vers l'avant en subissant une pression manuelle qui va le raccourcir pour permettre à deux boucles d'extrémité avant du fil de rigidification de pénétrer dans les deux brides de fixation avant. Une zone arrière du coussin peut par exemple être fixée par vissage à l'armature d'assise et le basculement du coussin s'effectuera autour de ces fixations arrière.

Selon une caractéristique possible de l'invention, une bride de fixation est solidarisée à une zone arrière de l'un des deux flasques, une autre bride de fixation étant solidarisée à une zone arrière de l'autre flasque. De cette manière, une zone avant du coussin est d'abord calée contre l'armature d'assise, puis ledit coussin bascule vers l'arrière en subissant une pression manuelle qui va le raccourcir pour permettre à deux boucles d'extrémité arrière du fil de rigidification de pénétrer dans les deux pattes de fixation arrière. La zone avant du coussin peut par exemple être fixée par vissage à l'armature d'assise et le basculement du coussin s'effectuera autour de ces fixations avant.

Selon une caractéristique possible de l'invention, une bride de fixation est solidarisée à une zone avant de l'un des flasques, une autre bride de fixation étant solidarisée à une zone arrière dudit flasque. Il suffit de mettre en butée le coussin contre l'autre flasque puis de le faire pivoter latéralement autour dudit flasque avant de procéder à une compression manuelle de ce coussin afin de faire pénétrer les boucles d'extrémité dans les deux brides de fixation fixées sur l'autre flasque.

Selon une caractéristique possible de l'invention, le procédé comprend une étape de découpe de la mousse et de la coiffe de manière à faire émerger ladite au moins une boucle d'extrémité et à découvrir ladite au moins une bride de fixation. Cette étape de découpe est fictive et traduit simplement le fait que la mousse et la coiffe sont fabriquées de manière à présenter une échancrure permettant de faire émerger une boucle d'extrémité et de rendre visible la bride de fixation destinée à recevoir ladite boucle. Il est plus facile de monter le coussin dans le siège lorsque la boucle d'extrémité et la bride de fixation sont visibles.

Selon une caractéristique possible de l'invention, l'étape de solidarisation de la bride de fixation à l'armature d'assise est réalisée à partir d'une technique à choisir parmi un vissage, un rivetage, un encliquetage et un soudage. Toutes ces techniques sont équivalentes, car la solidarisation de la bride de fixation à l'armature d'assise ne nécessite ni une robustesse particulière ni une sophistication importante.

Selon une caractéristique possible de l'invention, chaque bride de fixation comprend deux segments d'extrémité plans et alignés et un segment central déporté et parallèle auxdits deux segments d'extrémité, l'étape de solidarisation étant réalisée au moyen d'une mise au contact des deux segments d'extrémité contre l'armature d'assise de manière à créer un jeu entre le segment central et ladite armature d'assise. La bride de fixation est destinée à enfermer une boucle d'extrémité dans le but de la maintenir contre l'armature d'assise.

Selon une caractéristique possible de l'invention, le procédé est réversible. Autrement dit, pour démonter le coussin du siège, il suffit d'appliquer les étapes du procédé selon l'invention en sens inverse. De cette manière, il faut d'abord appliquer une pression sur le coussin afin de le raccourcir et de permettre à la boucle d'extrémité de sortir de la bride de fixation. On fait ensuite pivoter le coussin pour le retirer de l'armature d'assise. Toutes ces opérations s'effectuent sans outil sauf si ledit coussin est fixé partiellement à l'armature d'assise au moyen de vis, de clips ou de rivets.

Un exemple non inventif montre un siège de véhicule comprenant une armature d'assise, un coussin comprenant un fil de rigidification, une mousse et une coiffe, ledit fil étant noyé dans ladite mousse qui est elle-même délimitée par la coiffe.

Cet exemple non inventif montre en outre que le siège comprend au moins une bride de fixation solidarisée à l'armature d'assise, au moins une boucle d'extrémité dudit fil de rigidification étant insérée dans ladite au moins une bride de fixation.

La particularité d'un tel siège est que le coussin est monté sur l'armature d'assise à partir d'un procédé selon l'invention et qu'une fois qu'il a été monté, ledit coussin peut être retiré facilement et rapidement sans l'aide d'un outil spécifique.

Un procédé selon l'invention permet de monter rapidement et simplement un coussin sur l'armature d'assise d'un siège, sans utiliser un outil spécifique et sans avoir recours à des manipulations compliquées nécessitant de la force. Il a de plus l'avantage de permettre un retrait rapide et simple du coussin une fois que celui-ci a été monté, également sans outil et sans efforts particuliers, pour les interventions d'après-vente, ou pour faciliter une intervention rapide dans le véhicule, par exemple par des pompiers.

On donne ci-après une description détaillée d'un mode de réalisation préféré d'un procédé selon l'invention, en se référant aux figures suivantes :
[Fig. 1] représente une vue schématique de côté d'un siège adapté au procédé selon l'invention, le coussin étant monté,
[Fig. 2] représente une vue schématique de côté d'un siège adapté au procédé selon l'invention, le coussin étant dans une phase de montage,
[Fig. 3] représente une vue de face d'une zone d'un siège de véhicule adapté au procédé selon l'invention selon montrant une boucle d'extrémité insérée dans une bride de fixation,
[Fig. 4] représente une vue en perspective d'une zone d'un siège de véhicule adapté au procédé selon l'invention montrant une boucle d'extrémité insérée dans une bride de fixation,
[Fig. 5] représente une vue de côté d'une zone d'un siège de véhicule adapté au procédé selon l'invention montrant une boucle d'extrémité insérée dans une bride de fixation

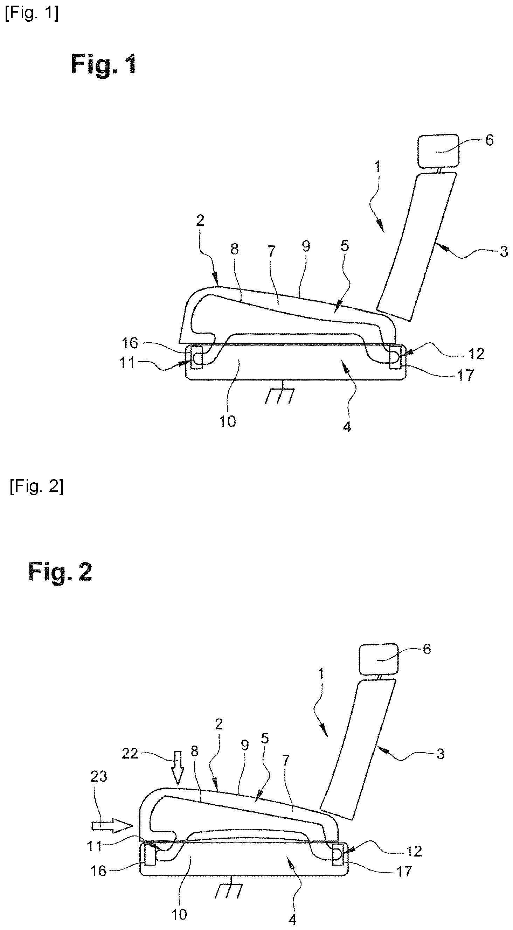

En se référant aux figures 1 et 2, un siège 1 adapté au procédé selon l'invention comprend une assise 2 et un dossier 3, ladite assise 2 comportant une armature d'assise 4 et un coussin 5 destiné à venir se fixer à ladite armature d'assise 4.

Avantageusement le dossier 3 est inclinable et comprend généralement un appui-tête 6. Le coussin 5 est composé principalement d'une mousse 7, d'un fil de rigidification 8 et d'une coiffe 9, ledit fil de rigidification 8 étant noyé dans la mousse 7 qui elle-même est délimitée par la coiffe 9. Le fil de rigidification 8 est préférentiellement réalisé en métal et la coiffe 9 est avantageusement réalisée en tissu ou en cuir.

L'armature d'assise 4 comprend deux flasques latéraux 10 parallèles, s'étendant chacun dans un plan vertical et longitudinal XZ du véhicule.

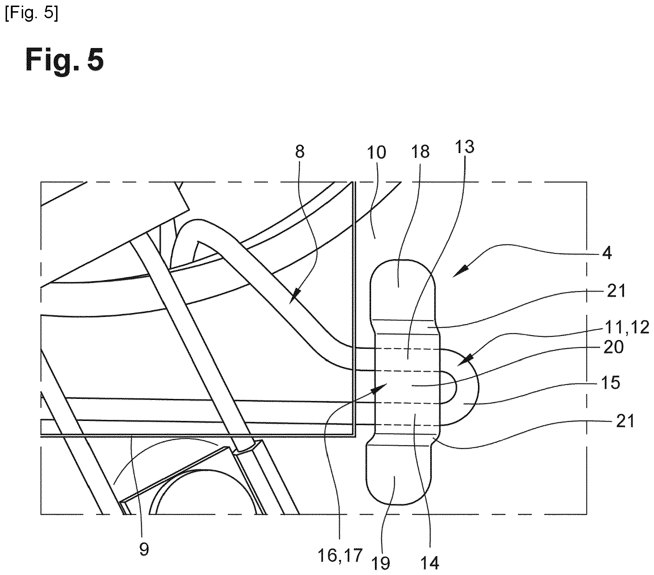

En se référant aux figures 1, 2, 3, 4 et 5 le fil de rigidification 8 présente quatre boucles d'extrémité 11, 12 caractérisées chacune par deux segments rectilignes 13, 14 parallèles et un segment incurvé 15 reliant lesdits deux segments rectilignes 13, 14, ledit segment incurvé 15 représentant la partie distale de la boucle d'extrémité 11, 12. Autrement dit chaque segment incurvé 15 relie une extrémité d'un segment rectiligne 13, 14 à une extrémité de l'autre segment rectiligne 13, 14. Avantageusement, les deux segments rectilignes 13, 14 d'une boucle d'extrémité 11, 12 s'étendent horizontalement. Chaque boucle d'extrémité 11, 12 s'inscrit dans un plan vertical et longitudinal XZ du véhicule.

Le coussin 5 est délimité par deux bords latéraux parallèles s'étendant selon un axe longitudinal X du véhicule, ledit coussin 5 possédant deux boucles d'extrémités avant 11 et deux boucles d'extrémité arrière 12, de sorte qu'une boucle d'extrémité avant 11 et une boucle d'extrémité arrière 12 viennent au contact de chacun desdits deux bords latéraux.

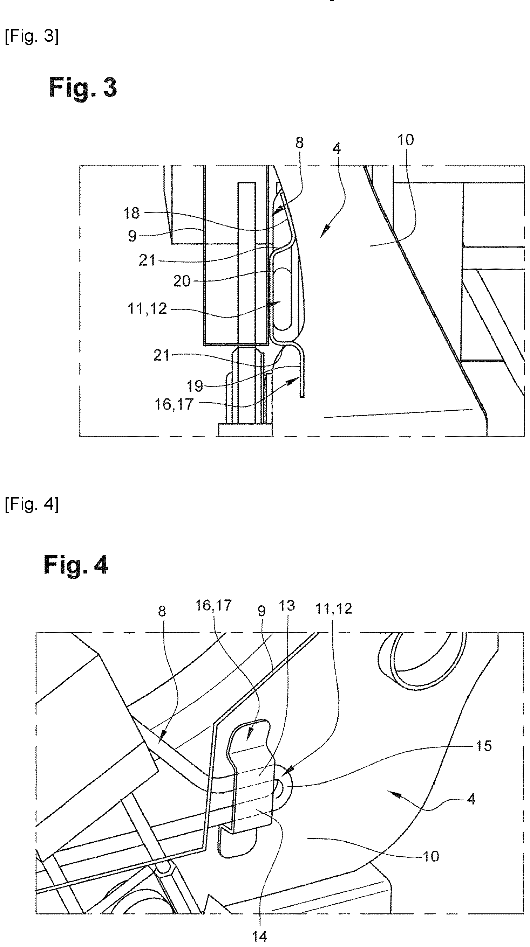

En se référant aux figures 3, 4 et 5 quatre brides de fixation 16, 17 sont fixées à l'armature d'assise 4, deux brides 16, 17 étant fixées à un flasque latéral 10 et deux autres brides 16, 17 étant fixées à l'autre flasque 10. De cette manière, chaque flasque 10 supporte une bride avant 16 et une bride arrière 17, les deux brides avant 16 étant alignées suivant un axe transversal Y du véhicule et les deux brides arrière 17 étant également alignées suivant ledit axe transversal Y. Chaque bride 16 est plane et de faible épaisseur, et comprend deux segments d'extrémité 18, 19 rectilignes encadrant un segment central 20 rectiligne, qui est décalé par rapport auxdits deux segments d'extrémité 18, 19. Les deux segments d'extrémité 18, 19 sont dans la continuité l'un de l'autre et le segment central 20 est décalé par rapport auxdits segments d'extrémité 18, 19. Le segment central 20 est relié aux deux segments d'extrémité 18, 19 au moyen de deux segments rectilignes de liaison 21, qui sont inclinés par rapport au segment central 20 et par rapport aux deux segments d'extrémité 18, 19. Chaque bride 16, 17 est allongée et possède un axe longitudinal s'étendant le long des deux segments d'extrémité 18, 19, des deux segments de liaison 21 et du segment central 20. Les quatre brides 16, 17 sont disposées sur les flasques latéraux 10 de l'armature d'assise 4, de sorte que leur axe longitudinal s'étende verticalement. Chaque bride 16, 17 est fixée à l'armature d'assise 4 par l'intermédiaire de ses deux segments d'extrémité 18, 19 cette fixation pouvant par exemple être réalisée par encliquetage, par vissage ou par soudage. Une fois fixée à l'armature d'assise 4, chaque bride 16, 17 ménage un espace entre une surface du flasque 10 et le segment central 20.

En se référant aux figures 1, 4 et 5, l'espace ménagé entre chaque bride 16, 17 et la surface du flasque 10 est destiné à recevoir une boucle d'extrémité 11, 12 du fil de rigidification 8 du coussin d'assise 5. Autrement dit, le coussin 5 est arrimé à l'armature d'assise 4 au moyen de l'insertion d'une boucle d'extrémité 11, 12 du fil de rigidification 8 dans une bride de fixation 16, 17. De cette manière, les quatre boucles d'extrémité 11, 12 sont insérées dans les quatre brides de fixation 16, 17.

En se référant aux figures 3, 4, 5 le coussin 5 présente quatre échancrures réalisées dans la mousse 7 et dans la coiffe 9 de manière à découvrir et donc à rendre visible les quatre boucles d'extrémité 11, 12 du fil de rigidification 8, lesdites échancrures permettant également de rendre visibles les brides de fixation 16, 17 arrimées aux flasques 10 de l'armature d'assise 4.

Un procédé de montage d'un coussin 5 dans l'armature d'assise 4 d'un siège 1 de véhicule adapté au procédé selon l'invention, comprend les étapes suivantes :
- une étape d'insertion des deux boucles d'extrémité arrière 12 dans les deux brides de fixation arrière 17,
- une étape de pivotement vers le bas dans le sens indiqué par la flèche 22 de la figure 2, autour d'un axe de rotation matérialisé par les deux brides de fixation arrière 17,
- une étape de compression manuelle du coussin 5 dans le sens indiqué par la flèche 23 de la figure 2, pour raccourcir temporairement la longueur du coussin 5 et permettre ainsi aux deux boucles d'extrémité avant 11 de pénétrer dans les deux brides de fixation avant 16. Cette étape est préférentiellement réalisée en même temps que l'étape de pivotement,
- une étape de relâchement du coussin 5 pour permettre auxdites boucles d'extrémité avant 11 de se glisser à l'intérieur des brides de fixation avant 16 comme illustré à la figure 1.

Le procédé ci-avant décrit s'effectue facilement et rapidement, sans l'utilisation d'outils particuliers et sans manipulations compliquées nécessitant un effort important.

Le retrait du coussin 5 s'effectue de façon tout aussi simple en suivant les mêmes étapes mais en sens inverse. En effet, il faut commencer par comprimer manuellement le coussin 5 afin de faire sortir les boucles d'extrémité avant 11 des brides de fixation avant 16, puis de faire pivoter vers le haut le coussin 5 afin de surélever une zone avant dudit coussin 5, ce pivotement s'effectuant autour d'un axe de rotation passant par les deux brides de fixation arrière 17 dans lesquelles sont insérées les deux boucles d'extrémité arrière 12.

## Revendications

1. Procédé de fixation d'un coussin (5) dans une armature d'assise (4) d'un siège (1), ledit coussin (5) comprenant un fil (8) de rigidification, une mousse (7) et une coiffe (9), ledit fil (8) étant noyé dans ladite mousse (7) qui est elle-même délimitée par ladite coiffe (9), **caractérisé en ce qu'**il comprend les étapes suivantes :
- une étape de solidarisation d'au moins une bride (16, 17) de fixation à l'armature d'assise (4),
- une étape de mise en butée du coussin (5) contre l'armature d'assise (4),
- une étape de déplacement du coussin (5) autour de la butée,
- une étape de compression manuelle dudit coussin (5) pour permettre à au moins une boucle d'extrémité (11, 12) du fil (8) de rigidification de s'insérer dans la bride (16, 17),
- une étape de relâchement du coussin (5) pour permettre à ladite boucle d'extrémité (11, 12) de se glisser à l'intérieur de la bride (16, 17),

2. Procédé de fixation selon la revendication 1, **caractérisé en ce que** l'armature d'assise (4) comprend deux flasques latéraux (10), et **en ce que** ladite au moins une bride (16, 17) de fixation est solidarisée à l'un desdits flasques (10).

3. Procédé de fixation selon la revendication 2, **caractérisé en ce qu'**une bride (16) de fixation est solidarisée à une zone avant de l'un des deux flasques (10), et **en ce qu'**une autre bride de fixation (16) est solidarisée à une zone avant de l'autre flasque (10).

4. Procédé de fixation selon l'une quelconque des revendications 1 à 3, **caractérisé en ce qu'**une bride (17) de fixation est solidarisée à une zone arrière de l'un des deux flasques (10), et **en ce qu'**une autre bride (17) de fixation est solidarisée à une zone arrière de l'autre flasque (10).

5. Procédé de fixation selon la revendication 2, **caractérisé en ce qu'**une bride (16) de fixation est solidarisée à une zone avant de l'un des flasques (10), et **en ce qu'**une autre bride de fixation (17) est solidarisée à une zone arrière dudit flasque (10).

6. Procédé de fixation selon l'une quelconque des revendications 1 à 5, **caractérisé en ce qu'**il comprend une étape de découpe de la mousse (7) et de la coiffe (9) de manière à faire émerger ladite au moins une boucle d'extrémité (16, 17) et à découvrir ladite au moins une bride (16, 17) de fixation.

7. Procédé de fixation selon l'une quelconque des revendications 1 à 6, **caractérisé en ce que** l'étape de solidarisation de la bride (16, 17) de fixation à l'armature d'assise (4) est réalisée à partir d'une technique à choisir parmi un vissage, un rivetage, un encliquetage et un soudage.

8. Procédé de fixation selon l'une quelconque des revendications 1 à 7, **caractérisé en ce que** chaque bride (16, 17) de fixation comprend deux segments d'extrémité (18, 19) plans et alignés et un segment central (20) déporté et parallèle auxdits deux segments d'extrémité (18, 19), et **en ce que** l'étape de solidarisation est réalisée au moyen d'une mise au contact des deux segments d'extrémité (18, 19) contre l'armature d'assise (4) de manière à créer un espace entre le segment central (20) et ladite armature d'assise (4).

9. Procédé de fixation selon l'une quelconque des revendications 1 à 8, **caractérisé en ce qu'**il est réversible.

## Patentansprüche

1. Verfahren zum Befestigen eines Polsters (5) in einem Sitzteilgestell (4) eines Sitzes (1), wobei das Polster (5) einen Aussteifungsdraht (8), einen Schaumstoff (7) und einen Bezug (9) umfasst, wobei der Draht (8) in den Schaumstoff (7) eingebettet ist, der wiederum durch den Bezug (9) begrenzt wird, **dadurch gekennzeichnet, dass** es die folgenden Schritte umfasst:
- einen Schritt des Verbindens mindestens eines Befestigungsflansches (16, 17) mit dem Sitzteilgestell (4),
- einen Schritt des Anschlagens des Polsters (5) gegen das Sitzteilgestell (4),
- einen Schritt des Bewegens des Polsters (5) um den Anschlag herum,
- einen Schritt des manuellen Zusammendrückens des Posters (5), um es mindestens einer Endschlinge (11, 12) des Drahts (8) zur Aussteifung zu ermöglichen, sich in den Flansch (16, 17) einzufädeln,
- einen Schritt des Loslassens des Polsters (5), um es der Endschlinge (11, 12) zu ermöglichen, in den Flansch (16, 17) hineinzugleiten.

2. Verfahren zum Befestigen nach Anspruch 1, **dadurch gekennzeichnet, dass** das Sitzteilgestell (4) zwei seitliche Wangen (10) umfasst, und dass der mindestens eine Befestigungsflansch (16, 17) mit einer der Wangen (10) verbunden ist.

3. Verfahren zum Befestigen nach Anspruch 2, **dadurch gekennzeichnet, dass** ein Befestigungsflansch (16) mit einem vorderen Bereich der einen der beiden Wangen (10) verbunden ist und dass ein anderer Befestigungsflansch (16) mit einem vorderen Bereich der anderen Wange (10) verbunden ist.

4. Verfahren zum Befestigen nach einem der Ansprüche 1 bis 3, **dadurch gekennzeichnet, dass** ein Befestigungsflansch (17) mit einem hinteren Bereich der einen der beiden Wangen (10) verbunden ist und dass ein anderer Befestigungsflansch (17) mit einem hinteren Bereich der anderen Wange (10) verbunden ist.

5. Verfahren zum Befestigen nach Anspruch 2, **dadurch gekennzeichnet, dass** ein Befestigungsflansch (16) mit einem vorderen Bereich der einen der Wagen (10) verbunden ist und dass ein anderer Befestigungsflansch (17) mit einem hinteren Bereich der Wange (10) verbunden ist.

6. Verfahren zum Befestigen nach einem der Ansprüche 1 bis 5, **dadurch gekennzeichnet, dass** es einen Schritt des Schneidens des Schaumstoffs (7) und des Bezugs (9) umfasst, so dass die mindestens eine Endschlinge (16, 17) zum Vorschein kommt und der mindestens eine Befestigungsflansch (16, 17) freigelegt wird.

7. Verfahren zum Befestigen nach einem der Ansprüche 1 bis 6, **dadurch gekennzeichnet, dass** der Schritt des Verbindens des Befestigungsflansches (16, 17) mit dem Sitzteilgestell (4) anhand einer Technik ausgeführt wird, die unter einem Schrauben, einem Nieten, einem Rasten und einem Schweißen zu wählen ist.

8. Verfahren zum Befestigen nach einem der Ansprüche 1 bis 7, **dadurch gekennzeichnet, dass** jeder Befestigungsflansch (16, 17) zwei plane und fluchtende Endsegmente (18, 19) und ein versetztes und zu den beiden Endsegmenten (18, 19) paralleles zentrales Segment (20) umfasst und dass der Schritt des Verbindens mittels eines Inkontaktbringens der beiden Endsegmente (18, 19) gegen das Sitzteilgestell (4) ausgeführt wird, so dass ein Raum zwischen dem zentralen Segment (20) und dem Sitzteilgestell (4) geschaffen wird.

9. Verfahren zum Befestigen nach einem der Ansprüche 1 bis 8, **dadurch gekennzeichnet, dass** es umkehrbar ist.

## Claims

1. Method for fastening a cushion (5) in a squab frame (4) of a seat (1), said cushion (5) comprising a stiffening wire (8), a foam (7) and a cover (9), said wire (8) being embedded into said foam (7) which is itself delimited by said cover (9), **characterized in that** it comprises the following steps:
- a step of securing at least one fastening flange (16, 17) to the squab frame (4),
- a step of bringing the cushion (5) into abutment against the squab frame (4),
- a step of moving the cushion (5) around where it abuts,
- a step of manually compressing said cushion (5) to allow at least one end loop (11, 12) of the stiffening wire (8) to be inserted into the flange (16, 17),
- a step of relaxing the cushion (5) to allow said end loop (11, 12) to slide within the flange (16, 17) .

2. Fastening method according to Claim 1, **characterized in that** the squab frame (4) comprises two side plates (10), and **in that** said at least one fastening flange (16, 17) is secured to one of said side plates (10).

3. Fastening method according to Claim 2, **characterized in that** one fastening flange (16) is secured to a front region of one of the two side plates (10), and **in that** another fastening flange (16) is secured to a front region of the other side plate (10).

4. Fastening method according to any one of Claims 1 to 3, **characterized in that** one fastening flange (17) is secured to a rear region of one of the two side plates (10), and **in that** another fastening flange (17) is secured to a rear region of the other side plate (10).

5. Fastening method according to Claim 2, **characterized in that** one fastening flange (16) is secured to a front region of one of the side plates (10), and **in that** another fastening flange (17) is secured to a rear region of said side plate (10).

6. Fastening method according to any one of Claims 1 to 5, **characterized in that** it comprises a step of cutting the foam (7) and the cover (9) so as to cause said at least one end loop (16, 17) to emerge and to uncover said at least one fastening flange (16, 17).

7. Fastening method according to any one of Claims 1 to 6, **characterized in that** the step of securing the fastening flange (16, 17) to the squab frame (4) is carried out using a technique to be chosen from among screwing, riveting, snap-fastening and welding.

8. Fastening method according to any one of Claims 1 to 7, **characterized in that** each fastening flange (16, 17) comprises two aligned planar end segments (18, 19) and a central segment (20) which is offset and parallel to said two end segments (18, 19) and **in that** the securing step is carried out by means of bringing the two end segments (18, 19) into contact with the squab frame (4) so as to create a space between the central segment (20) and said squab frame (4).

9. Fastening method according to any one of Claims 1 to 8, **characterized in that** it is reversible.
